# EUROPÄISCHE PATENTANMELDUNG

(11) **EP 1 429 337 A1**
(43) Veröffentlichungstag der Anmeldung: **16.06.2004**
(21) Anmeldenummer: 03405880.0
(22) Anmeldetag: 09.12.2003
(51) Int. Cl.: G11B 33/04

(54) **Befestigungsvorrichtung für Datenträger**

(30) Priorität: 11.12.2002 CH 21132002
(71) Anmelder: AWM Mold Tech AG, 5630 Muri (CH)
(72) Erfinder: Krummenacher, Josef, 5630 Muri (CH)
(74) Vertreter: Bremi, Tobias, Dr.

(57) **Zusammenfassung**

Bei einer Befestigungsvorrichtung für wenigstens einen kreisförmigen Datenträger (2) mit zentraler Öffnung in einer Kassette, bei welcher die Kassette einen Mittelteil (1) aufweist, an welchem ein Kranz von Zungen (3, 3'), die federnd in die zentrale Öffnung des wenigstens einen Datenträgers (2) eingreifen, befestigt ist, wird insbesondere bei Verwendung von weichen Werkstoffen oder dünn ausgebildeten Zungen das Herausfallen der Datenträger, z. B. CDs oder DVDs dadurch verhindert, dass wenigstens ein Verbindungselement (14,14') angeordnet ist, welches wenigstens zwei der Zungen (3,3') beweglich miteinander verbindet, wobei das Verbindungselement (14,14') bei der Herstellung der Befestigungsvorrichtung in einer ersten Position (14) gefertigt wird, und nach der Herstellung zur Erhöhung der Rückstellkraft der Zungen (3,3') gegen den Datenträger (2) in eine zweite Position (14') umgelegt wird.

## Beschreibung

### TECHNISCHES GEBIET

Die vorliegende Erfindung betrifft eine Befestigungsvorrichtung für wenigstens einen kreisförmigen Datenträger mit zentraler Öffnung in einer Kassette, wobei die Kassette einen Mittelteil aufweist, an welchem ein Kranz von Zungen, die federnd in die zentrale Öffnung des wenigstens einen Datenträgers eingreifen, befestigt ist.

### STAND DER TECHNIK

Zur sicheren Aufbewahrung von Datenträgern wie CDs oder DVDs werden üblicherweise Kassetten vorgesehen, in welche die Datenträger eingelegt werden können. Die Datenträger werden dabei in der Kassette mit einer Befestigungsvorrichtung am Gehäuse befestigt. Die Befestigungsvorrichtung kann entweder den peripheren Rand des Datenträgers umgreifen respektive haltern oder aber, und dies ist die häufiger gewählte Variante, die Befestigungsvorrichtung greift in die zentrale Öffnung des Datenträgers ein (gegebenenfalls in Kombination mit einer zusätzlichen peripheren Halterung). Derartige zentrale Befestigungsvorrichtungen, welche üblicherweise einen Kranz von flexiblen Zungen umfassen, welche in die zentrale Öffnung federnd eingreifen, finden sich in einer Vielzahl von Dokumenten beschrieben, so z. B. in der WO 01/39193, der EP 0817196, der EP 0762425, der DE 4107218, oder der US 5,785,172.

Üblicherweise werden für die Herstellung von derartigen Kassetten Thermoplaste verwendet, d. h. Kunststoffe mit einem Fliessübergangsbereich oberhalb der Gebrauchstemperatur. In Frage kommen dazu insbesondere die auf dem Markt günstig erhältlichen Kunststoffe wie Polyethylen (PE), insbesondere LDPE (Low Density Polyethylene) und HDPE (High Density Polyethylene), Polyvinylchlorid (PVC), Polystyrol (PS) oder Polypropylen (PP). Dabei wird die ganze Kassette aus diesem Material in einem Urform-Prozess gefertigt, es können aber auch Materialkombinationen zur Anwendung kommen, wobei z. B. die äussere Hülle aus dem einen Material gefertigt ist, und die Einlage, d. h. der Mittelteil, auf welchem die Befestigungsvorrichtung angeordnet ist, aus einem anderen Material hergestellt ist.

Problematisch im Zusammenhang mit derartigen Befestigungsvorrichtungen ist häufig, dass diese Befestigungsvorrichtungen dazu neigen, z. B. bei einem Fallenlassen der Kassette teilweise zu brechen. So kann es insbesondere bei der Verwendung von Polystyrol als Material für die Befestigungsvorrichtung vorkommen, dass bei einem Sturz der Kassette parallel zur Ebene der darin befestigten CD einer oder mehrere der Zähne des Kranzes abbrechen, was damit zusammenhängt, dass Polystyrol steif und

ziemlich spröde ist, wobei die Steifigkeit aber eben im Zusammenhang mit einer gewünschten hohen Rückstellkraft der Zähne erwünscht ist. Um ein derartiges Abbrechen von Zähnen zu verhindern, schlägt z. B. die EP 0692791 vor, die Auflagefläche für die CD an den Zähnen hinterschnitten auszugestalten und die Zähne frei tragend mit je einem radialen Arm und einem axialen Arm auszubilden, wobei ein kontinuierlicher Übergangs- bzw. Verbindungsbogen zwischen dem radialen und dem axialen Arm vorgesehen ist. So kann sowohl eine gute Halterung als auch genügende Festigkeit der Haltezungen gewährleistet werden, da die Haltezungen eine erhöhte Elastizität aufweisen und durch die hinterschnittene Auflagefläche an den Zähnen Scherkräfte gut verteilt werden.

Ebenfalls problematisch bei derartigen Befestigungsvorrichtungen ist die Tatsache, dass sich bei einem Fallenlassen der Kassette der Datenträger häufig aus der Befestigungsvorrichtung löst, und anschliessend lose in der Kassette herumfliegt. Dabei kann, insbesondere wenn dies nicht bemerkt wird und die Kassette mit lose darinliegendem Datenträger bewegt wird, der Datenträger irreversibel beschädigt werden. Dieses Problem kann z. B. dadurch gelöst werden, dass die Befestigungsvorrichtung den Datenträger einfach mit einer grösseren Kraft hält, was z. B. durch eine grössere Steifigkeit, durch zusätzliche periphere Halterungen, oder durch ausgeprägtere Rückhaltenasen erreicht werden kann. Diese Massnahmen weisen aber allesamt den Nachteil auf, dass es entsprechend auch mit einem grösseren Kraftaufwand verbunden ist, den Datenträger in die Kassette einzulegen, und dass es insbesondere auch schwieriger ist, den Datenträger aus der Kassette respektive aus der Befestigungsvorrichtung herauszulösen. Dies kann soweit gehen, dass die Gefahr besteht, den Datenträger beim Herausnehmen zu beschädigen.

Entsprechend wäre es eigentlich wünschenswert, vergleichsweise weiche und dadurch üblicherweise weniger spröde Materialien für die Herstellung von derartigen Befestigungsvorrichtungen zu verwenden. Leider lassen sich aber typischerweise derart weiche Materialien nur schwierig bei schlanker Bauweise mit einer genügend hohen Rückstellkraft der Zähne herstellen.

### DARSTELLUNG DER ERFINDUNG

Hier greift die Erfindung ein. Der Erfindung liegt demnach die Aufgabe zugrunde, eine Befestigungsvorrichtung für wenigstens einen kreisförmigen Datenträger mit zentraler Öffnung in einer Kassette zur Verfügung zu stellen, bei welcher der Datenträger bei gutem Entnahmekomfort zufridenstellend befestigt ist und bei welcher selbst bei der Verwendung von vergleichsweise weichen Materialien die Rückstellkraft der Zähne zur Halterung des Datenträgers genügend gross ist. Dabei weist die Kassette einen Mittelteil auf, an welchem federnde, in die zentrale Öffnung des Datenträgers eingreifende Mittel befestigt sind. Diese Mittel werden insbesondere in Form eines Kranzes von Zungen, die federnd in die zentrale Öffnung des wenigstens einen Datenträgers eingreifen, ausgestaltet. Beim kreisförmigen Datenträger kann es sich insbesondere um eine CD oder eine DVD handeln.

Die Lösung dieser Aufgabe wird dadurch erreicht, dass wenigstens ein Verbindungselement angeordnet ist, welches wenigstens zwei der Zungen beweglich miteinander verbindet, wobei das Verbindungselement bei der Herstellung der Befestigungsvorrichtung in einer ersten Position gefertigt wird, und nach der Herstellung zur Erhöhung der Rückstellkraft der Zungen gegen den Datenträger in eine zweite Position umgelegt ist.

Der Kern der Erfindung besteht mit anderen Worten darin, ein Verbindungselement zur Verfügung zu stellen, welches in einer ersten, gewissermassen entspannten Position hergestellt wird. Die so hergestellten Zähne verfügen typischerweise nicht über eine zufriedenstellende Rückstellkraft zur Halterung eines Datenträgers. Anschliessend wird nun aber das Verbindungselement in eine zweite Position umgelegt, sodass anfolgend die Rückstellkraft der Zungen erhöht ist. Die Einheit aus Verbindungselement und Zähnen wird entsprechend beim Umlegen in die zweite Position in einen gewissermassen gespannten oder vorgespannten Zustand gebracht, sodass auch bei weichem Material (oder analog bei dünner Ausbildung) der Zungen eine grosse Rückstellkraft bewirkt werden kann. So ist es möglich, entweder bei sehr dünn ausgebildeten Zähnen oder bei Zähnen aus weichem Material, wo üblicherweise eine direkte Herstellung der Befestigungsvorrichtung mit genügender Rückstellkraft nicht möglich ist, die erforderliche Rückstellkraft nach dem eigentlichen Herstellungsprozess durch das Umlegen oder Umklappen oder Einschnappen von derartigen Verbindungsmitteln zu bewirken. Der eigentliche Grundgedanke der Idee besteht somit darin, eine Befestigungsvorrichtung in einem ersten Zustand in einem Urform-Prozess herzustellen (wobei in diesem ersten Zustand die Rückstellkraft der Zähne für die zufriedenstellende Halterung des Datenträgers meist ungenügend ist) und dabei ein Mittel vorzusehen, welches nach dem Aushärten des Materials in eine andere stabile Lage umgelegt werden kann, wobei sich eine federnde Erhöhung der Rückstellkraft der Zähne einstellt.

Dieses Umlegen oder Einschnappen kann entweder so gestaltet werden, dass es irreversibel ist, d. h. nur einmal ohne Zerstörung von der ersten in die zweite Position erfolgen kann, oder aber es kann so gestaltet werden, dass eine Rückführung in die erste Position anschliessend wiederum möglich ist. Es ist dabei aber wohlverstandener Massen nicht das Ziel, gewissermassen durch ein Umlegen in die zweite Position den Datenträger in der Befestigungsvorrichtung zu fixieren, und jeweils zur Entnahme das Verbindungselement wieder in seine erste Position zurückzuführen. Sondern es geht darum, das Verbindungselement einmal in seine zweite Position zu bringen, und anschliessend Entnahme und Einlegen des Datenträgers bei Verbindungselement in zweiter Position vorzunehmen. Typischerweise ist entsprechend das Verbindungselement in seiner zweiten, gewissermassen vorgespannten Position zwischen den Zähnen versteckt, und für den Endbenutzer ist in der Regel gar nicht sichtbar, dass das Verbindungselement in einer anderen, ersten Position hergestellt wurde.

Eine erste bevorzugte Ausführungsform der vorliegenden Erfindung ist dadurch gekennzeichnet, dass gegenüberliegende Zungen über das wenigstens eine Verbindungselement miteinander verbunden sind. Werden derart gegenüberliegende Zungen wenigstens mittelbar über ein Verbindungselement miteinander verbunden, lässt sich die gewünschte Erhöhung der Rückstellkraft am einfachsten realisieren.

Eine weitere bevorzugte Ausführungsform zeichnet sich dadurch aus, dass die Zungen jeweils einen durch die zentrale Öffnung des wenigstens einen Datenträgers führenden axialen Arm aufweisen, und dass das wenigstens eine Verbindungselement im wesentlichen an den der Entnahmerichtung des Datenträgers zugewandten Enden dieser axialen Arme, bevorzugt mittelbar über an den der Entnahmerichtung des Datenträgers zugewandten Enden dieser axialen Arme angeordneten nach innen gerichteten radialen Armen, in die Zungen verbindender Weise angeformt ist. Besonders einfach lässt sich insbesondere das Einschnappen des Verbindungselements in seine zweite Position dann realisieren, wenn in der ersten Position das Verbindungselement wenigstens teilweise über die der Entnahmerichtung des Datenträgers zugewandten Enden dieser axialen Arme respektive der radialen Arme hinausragt, und über ein Hineindrücken in Einlegerichtung des Datenträgers in die zweite Position umgelegt, vorzugsweise eingeschnappt wird. Bevorzugt ragt das Verbindungselement in seiner zweiten Position im wesentlichen nicht mehr über die der Entnahmerichtung des Datenträgers zugewandten Enden dieser axialen Arme respektive der radialen Arme hinaus. So ist typischerweise für den Endbenutzer von aussen gar nicht mehr ohne weiteres ersichtlich, dass das Verbindungselement überhaupt in eine erste Position gebracht werden kann.

Weiterhin kann das Verbindungselement derart ausgebildet werden, dass es insbesondere elastisch ausgebildete Stege aufweist, welche an deren einem Ende mit den axialen respektive radialen Armen der Zungen verbunden sind, und dass das Verbindungselement weiterhin einen im wesentlichen auf der Symmetrieachse der Befestigungsvorrichtung angeordneten Knopf oder Ring aufweist, an welchem die Stege mit deren anderem Ende verbunden sind. Der Knopf oder Ring kann dabei als zylindrisches Element, insbesondere als kreiszylindrisches Element ausgebildet sein.

Bei einer anderen bevorzugten Ausführungsform sind die Zungen und das wenigstens eine Verbindungselement einstückig ausgebildet. Mit anderen Worten wird die gesamte Befestigungsvorrichtung inklusive Zähne und Verbindungselement(e) in einer einzigen Form in einem Urform-Prozess, z. B. in einem Spritzguss-Prozess, als einziges Stück hergestellt. Es kann sich dabei z.B. um ein Einkomponenten-Spritzgussverfahren oder ein Zweikomponenten-Spritzgussverfahren handeln.

Wie bereits weiter oben erwähnt, erweist sich der erfindungsgemässe Gedanke insbesondere dann als nützlich, wenn entweder die Zähne besonders dünn ausgebildet werden sollen, oder aber wenn ein weicher (und damit oftmals wenig spröder) Werkstoff Anwendung finden soll. Es handelt sich dabei typischerweise um einen polymeren Werkstoff. Unter einem weichen Werkstoff ist beispielsweise ein Polymer mit einem Elastizitätsmodul E im Bereich von 1300 bis 3200 MPa, insbesondere bevorzugt von weniger als 2000 MPa zu verstehen. Dabei kommt als Material insbesondere bevorzugt ein Thermoplast wie Polypropylen in Frage.

Eine andere bevorzugte Ausführungsform der vorliegenden Erfindung ist dadurch gekennzeichnet, dass der Kranz 4, 6 oder 8 oder 10 Zähne aufweist (eine ungerade Anzahl ist aber auch möglich), wobei gegebenenfalls alternierend Zähne mit Nasen zur Halterung des Datenträgers und Zähne ohne Nasen angeordnet sind, und dass entweder alle Zähne oder nur die Zähne mit Nasen über ein Verbindungselement verbunden sind. Dabei weist das Verbindungselement insbesondere bevorzugt einen zentralen einheitlichen Bereich auf, sowie von diesem zentralen, einheitlichen Bereich abzweigende, den zentralen einheitlichen Bereich mit den Zähnen wenigstens mittelbar verbindende, elastische Stege.

Eine weitere bevorzugte Ausführungsform der vorliegenden Befestigungsvorrichtung zeichnet sich dadurch aus, dass der Mittelteil einen inneren, im wesentlichen kreisscheibenförmigen Bereich aufweist, an dessen innerem Rand die Zungen derart beabstandet befestigt sind, dass zwischen den Zungen Spalten verbleiben. Bevorzugt weist der innere Bereich zudem Mittel auf, welche eine erhöhte federnde Beweglichkeit des Kranzes von Zungen relativ zur Kassette erlauben, wobei die Mittel insbesondere bevorzugt in Form einer, bevorzugt umlaufenden, Verjüngung, und/oder in Form einer, bevorzugt umlaufenden, gewellten Ausgestaltung, und/oder in Form von Löchern im inneren Bereich ausgebildet sind.

Grundsätzlich kann es sich im vorliegenden Fall um Befestigungsvorrichtungen für einzelne Datenträger handeln, oder aber um Befestigungsvorrichtungen für mehrere Datenträger. Entsprechend können z. B. die Zungen zur Aufnahme von zwei übereinander liegenden Datenträgern ausgebildet werden, wobei insbesondere bevorzugt alternierend nur an jeder zweiten Zunge eine Nase zur axialen Halterung des Datenträgers vorgesehen ist, und an den anderen Zungen eine Distanzhalterrippe zur kontrollierten Beabstandung der Datenträger angeordnet ist.

Insbesondere bei der Verwendung von Polypropylen als Material zeigt sich die erfindungsgemässe Wirkung besonders gut, wenn das wenigstens eine Verbindungselement Stege in Form von flexiblen, planen Lamellen mit einer Breite im Bereich von 0.8 bis 3 mm, bevorzugt im Bereich von 1 bis 2 mm und einer Dicke von 0.1 bis 0.4 mm, bevorzugt mit einer Dicke von 0.2 bis 0.3 mm aufweist.

Weitere bevorzugte Ausführungsformen der erfindungsgemässen Befestigungsvorrichtung sind in den abhängigen Ansprüchen beschrieben.

Ausserdem betrifft die vorliegende Erfindung ein Verfahren zur Herstellung einer Befestigungsvorrichtung, wie sie oben beschrieben wird. Das Verfahren ist dabei insbesondere dadurch gekennzeichnet, dass in einem ersten Herstellungsschritt in einem Urform-Prozess das Verbindungselement in einer ersten Position gefertigt wird, und anschliessend spätestens nach Einlage des Datenträgers zur Erhöhung der Rückstellkraft der Zungen gegen den Datenträger das Verbindungselement in eine zweite Position umgelegt wird.

Weitere bevorzugte Ausführungsformen des erfindungsgemässen Verfahrens sind in den abhängigen Ansprüchen beschrieben.

### KURZE ERLÄUTERUNG DER FIGUREN

Die Erfindung soll nachfolgend anhand von Ausführungsbeispielen im Zusammenhang mit den Zeichnungen näher erläutert werden. Es zeigen:

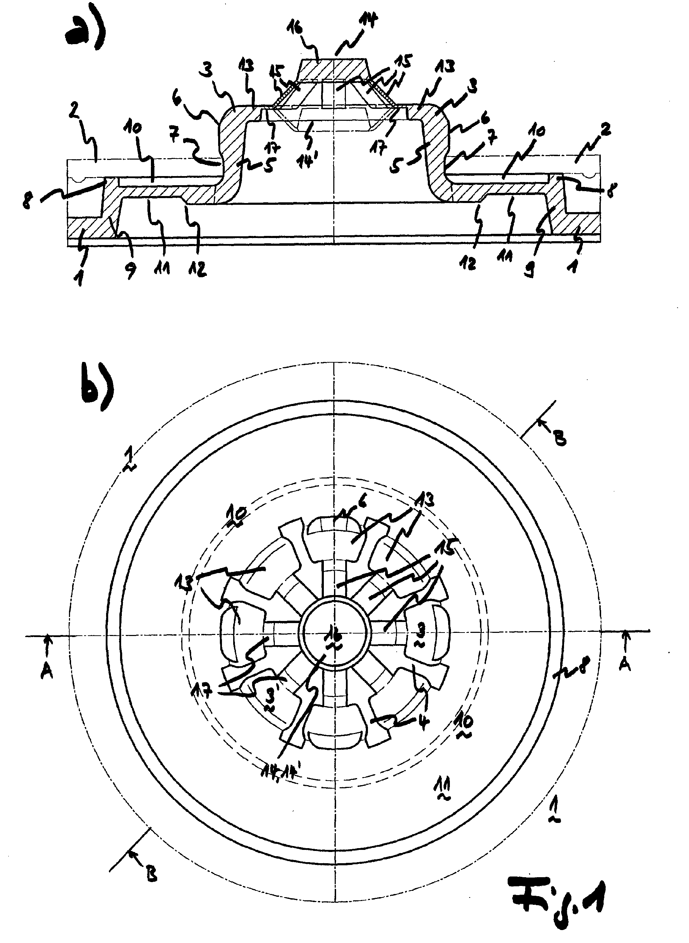

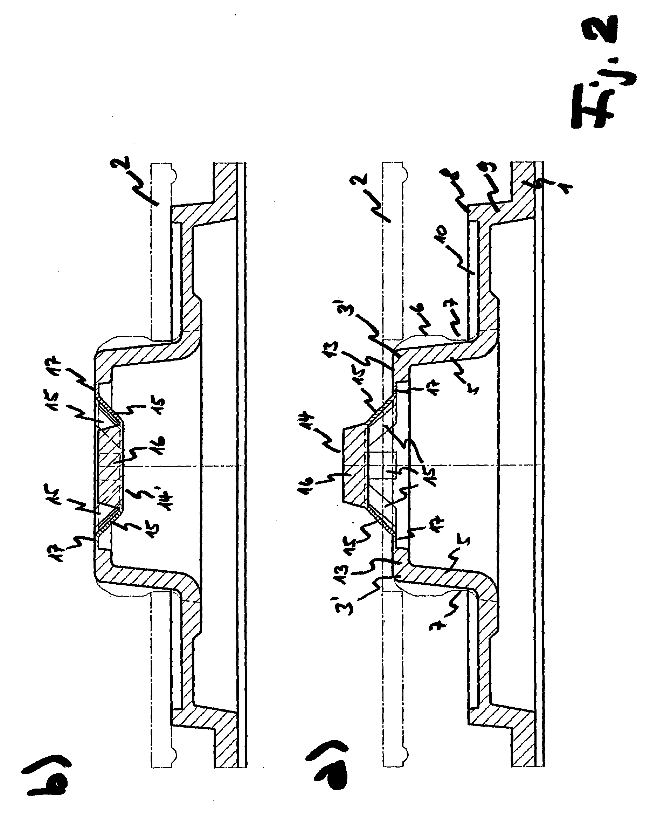

- Fig. 1: a) einen Schnitt entlang der Linie A-A in Fig. 1b), wobei das Verbindungselement sowohl in der ersten wie auch in der zweiten Position dargestellt ist; b) eine Aufsicht auf eine Befestigungsvorrichtung ;

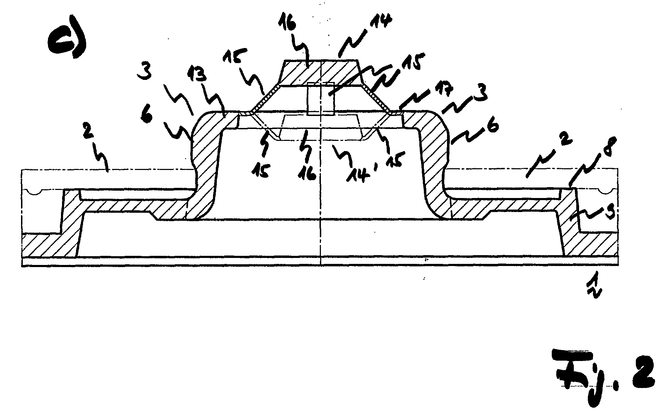

- Fig. 2: a) einen Schnitt entlang der Linie B-B in Fig. 1b), wobei das Verbindungselement in seiner ersten Position dargestellt ist ; b) einen Schnitt entlang der Linie B-B in Fig. 1b), wobei das Verbindungselement in seiner zweiten Position dargestellt ist ; c) einen Schnitt entlang der Linie A-A in Fig. 1b), wobei das Verbindungselement sowohl in der ersten wie auch in der zweiten Position dargestellt ist und nur Stege zu den Zähnen mit Nasen angeformt sind.

### WEGE ZUR AUSFÜHRUNG DER ERFINDUNG

Ein erstes Ausführungsbeispiel zur vorliegenden Erfindung ist in den Figuren 1 und 2 dargestellt. Fig. 1b) zeigt eine Aufsicht auf eine Befestigungsvorrichtung. Dabei sind alle dargestellten Elemente aus Polypropylen (PP) gefertigt. Die Befestigungsvorrichtung ist in einer Kassette befestigt oder bildet integralen Bestandteil einer derartigen Kassette. Von der Kassette ist nur der Mittelteil 1 dargestellt, welcher in der Regel als ebene, aus Kunststoff gefertigte Fläche ausgebildet ist, und welcher unterhalb der CD 2 zu liegen kommt. Ganz allgemein ist eine derartige Befestigungsvorrichtung zur Aufnahme von Datenträgern wie CDs oder DVDs mit einer zentralen Öffnung geeignet, beispielhaft sei aber im Weiteren nur noch von CDs die Rede. Ausserdem sei darauf hingewiesen, dass eine derartige Befestigungsvorrichtung mit zusätzlichen Klemmen kombiniert werden kann, welche die CD 2 am peripheren Rand fassen. Die Ebene, welche den Mittelteil 1 bildet, weist eine Dicke von 1,4 mm auf. Die Befestigungsvorrichtung verfügt ausserdem über einen Stützring 8, auf welchen die CD, wenn sie befestigt ist, aufliegt, respektive auf welchen im Fall von mehreren CDs die unterste CD zu liegen kommt. Der Stützring 8 weist einen Durchmesser von 30 mm auf, sodass die CD mit dem Datenbereich den Stützring nicht berührt. Der Stützring 8 weist eine Breite von ca. 1 mm auf. Unmittelbar radial nach innen an den Stützring 8 anschliessend befindet sich ein innerer kreisscheibenförmiger Bereich 10, welcher in der Mitte einen Kranz von 8 Zähnen 3,3' trägt. Dabei verfügen diese Zähne alternierend über Nasen 6, mit welchen die CD zurückgehalten wird. Zwischen den Zähnen 3,3' befinden sich Spalten 4, welche sich aber nur bis zum Fuss der Zähne erstrecken, und nicht in den inneren Bereich 10 hineinragen.

Der innere Bereich 10 verfügt über einen verjüngten Bereich 11, welcher kreisscheibenförmig ausgebildet ist und im wesentlichen unmittelbar radial an den Stützring 8 anschliesst. Der verjüngte Bereich 11 weist dabei eine Dicke von 0,7 mm und eine Breite b von ca. 4 mm auf, und der verjüngte Bereich 11 ist nach innen über die Begrenzung 12 begrenzt (in Fig. 1 gestrichelt angedeutet).

Die Zähne 3,3' verfügen über einen radialen Arm 13, welcher unter anderem dazu verwendet werden kann, die Entnahme der CD zu erleichtern. Dazu presst man mit dem Daumen auf die Arme 13, sodass die Zähne 3,3' leicht nach innen kippen und damit auch die Nasen 6 zurückweichen und die CD leicht entnommen werden kann.

Fig. 1a) zeigt einen Schnitt entlang der Linie A-A durch eine Befestigungsvorrichtung gemäss Fig. 1b). Der Schnitt zeigt damit insbesondere jene Zähne 3, welche über Nasen 6 verfügen. In diesem Schnitt wird sichtbar, dass der Mittelteil 1 über einen gewissermassen zylinderförmigen, axial verlaufenden Abschnitt 9 verfügt, welcher in der Auflagefläche respektive dem Stützring 8 endet. Der Abschnitt 9 gewährleistet eine Beabstandung der CD 2 von der Ebene vom Mittelteil 1 in jenem (nicht dargestellten) Bereich der CD, wo effektiv Daten gespeichert sind. Fig. 1a) zeigt, wie die Zähne 3 L-förmig ausgebildet sind und über eine Rille 7 verfügen, in welche der Innendurchmesser der zentralen Öffnung der CD 2 zu liegen kommt. Diese Rille 7 ergibt sich durch die Nasen 6, bei welchen die Zähne leicht nach radial aussen verdickt sind.

Aus Fig. 1a) wird unter anderem ersichtlich, wie der Kranz von Zähnen, welcher an einem Ring (innerhalb von der Begrenzung 12) mit grosser Materialstärke befestigt ist, eine gewissermassen starre Einheit bildet, welche über den flexiblen Bereich 11 mit dem äusseren Bereich des Mittelteils 1 verbunden ist. Lässt man eine Kassette, welche eine derartige Befestigungsvorrichtung aufweist, in Richtung der Achse der Befestigungsvorrichtung fallen, so kann die Einheit von CD 2 und Kranz von Zungen 3,3' nachfedern, und die Fallenergie respektive das von der CD ausgeübte Moment kann so nicht auf die Elastizität der Zungen wirken und die CD entsprechend nicht aus dem Kranz herauslösen.

Fig. 1 zeigt nun insbesondere ausserdem das Verbindungselement 14, welches über einen zentralen, auf der Symmetrieachse der Befestigungsvorrichtung angeordneten Knopf 16 verfügt, sowie über Stege 15, welche zu jedem der Zähne 3,3' führen, und welche als ebene Lamellen ausgebildet sind. Der Knopf kann dabei massiv ausgestaltet sein, er kann aber auch in Form eines Ringes, d.h. mit zentraler Öffnung, ausgebildet sein. Die Stege 15 verfügen typischerweise über eine Breite von 1.6 mm und eine Dicke von 0.22 mm und der Knopf 16 über einen Durchmesser von 5 mm. Fig. 1a) zeigt dabei sowohl die erste Position des Verbindungselements 14 (ausgezogen fett dargestellt) als auch die zweite Position des Verbindungselements 14' (gepunktet dünn dargestellt). Die Stege 15 verfügen über einen horizontalen, unmittelbar mit den Zähnen 3,3' verbundenen Bereich 17 und über einen geneigten Bereich, welcher an den horizontalen Bereich 17 anschliesst und die Stege mit dem Knopf 16 verbindet.

In der ersten Position des Verbindungselements 14, welche der Herstellungsposition entspricht, ragt das Verbindungselement über die Zähne nach oben hinaus. Die obere Fläche des Knopfes 16 ragt dabei im konkreten Fall um 3 mm über die Oberkante der Zähne hinaus. In dieser Position verfügen die Zähne 3,3' typischerweise über eine zu geringe Rückstellkraft, um einen Datenträger 2 tatsächlich genügend zu halten.

Entsprechend wird, wie mit dem Bezugszeichen 14' angedeutet, das Verbindungselement 14 nach seiner Herstellung in seine zweite Position 14' nach unten umgelegt, wobei anschliessend die Oberfläche des Knopfes leicht unterhalb der Oberkante der Zähne 3,3' liegt. Durch dieses Umlegen (oder Einschnappen, denn es stellt sich jeweils in der zweiten Position wiederum ein stabiler Zustand ein, d.h. das Element verschiebt sich nicht ohne Zwang wieder in die erste Position zurück) stellt sich eine über die Stege 15 vermittelte (Vor)Spannung der Zähne ein, welche zu einer erhöhten Rückstellkraft der Zähne bei einer Belastung nach innen, d. h. auf die Symmetrieachse der Befestigungsvorrichtung hin, führt. Dadurch wird ein Datenträger besser in der Befestigungsvorrichtung gehalten. Es handelt sich beim Umlegen von der ersten in die zweite Position aber nicht um ein Verschliessen der Befestigungsvorrichtung, welche anschliessend dazu führen würde, dass der Datenträger in der zweiten Position des Verbindungselements 14' nicht mehr entnommen werden kann. Vielmehr ist die Befestigungsvorrichtung so ausgelegt, dass der Knopf 16 stets in der zweiten Position verbleibt, und die Entnahme sowie das Einlegen in dieser Position erfolgt. Das Umlegen von der ersten in die zweite Position dient ausschliesslich dazu, die Rückstellkraft, welche im Herstellungsprozesses aufgrund der verwendeten Materialien und deren Stärke nicht erreicht werden kann, durch die genannte Vorspannung zur Verfügung zu stellen.

Der Knopf weist ausserdem den zusätzliche Vorteil auf, dass zur Entnahme des Datenträgers einfach auf diesen Kopf gedrückt werden kann. Dabei kippen die Zähne nach innen und die CD kann leicht entnommen werden. Häufig klemmt man sich nämlich bei Befestigungsvorrichtungen ohne Verbindungselement unangenehmerweise zwischen den Zähnen bei der Entnahme die Finger zwischen den beim Hineindrücken nach innen kippenden Zähnen ein.

Zur besseren Illustration der beiden Positionen ist in Fig. 2a) unter Weglassen der meisten Bezugszeichen nochmals isoliert die erste Position des Verbindungselements 14 dargestellt, und in Fig. 2b) die zweite Position des Verbindungselements 14' mit einem eingelegten Datenträger 2.

Beim Ausführungsbeispiel gemäss Fig. 1 und gemäss Figuren 2a) und 2b) sind jeweils alle Zähne 3,3' über Stege 15 mit dem zentralen Knopf 16 verbunden. Es ist aber auch möglich, nur jene Zähne 3 über Stege 15 mit dem Knopf 16 zu verbinden, welche über eine Nase 6 verfügen. Da insbesondere die Zähne 3 mit Nasen 6 in Bezug auf die Rückstellkraft und die Halterung der CD besonders relevant sind, reicht es typischerweise, nur die in Fig. 2c) angegebenen 4 Stege 15 vorzusehen. Das Vorsehen von 8 Stegen 15 wie in den Figuren 1 und 2a) und 2b) angegeben, kann insbesondere dann vorteilhaft sein, wenn die Halterung für mehrere CDs ausgelegt ist, oder wenn die Fig. 2c) angegebenen 4 Stege 15 zu leicht ausbrechen.

### BEZUGSZEICHENLISTE

- 1: Mittelteil der CD-Kassette
- 2: CD
- 3: L-förmige Zungen
- 4: Spalt zwischen den Zungen
- 5: axialer Arm von 3
- 6: Nase an 5
- 7: Rille für 2
- 8: Stützring für 2
- 9: axialer Abschnitt von 1
- 10: innerer kreisscheibenförmiger Bereich von 1
- 11: verjüngter Bereich von 10
- 12: radial innere Begrenzung von 11
- 13: radialer Arm von 3
- 14: Verbindungselement (erste Position, Herstellungszustand, entspannt)
- 14': Verbindungselement (zweite Position, gespannter Zustand)
- 15: elastische Stege
- 16: Knopf
- 17: horizontaler Abschnitt von 15

## Patentansprüche

1. Befestigungsvorrichtung für wenigstens einen kreisförmigen Datenträger (2) mit zentraler Öffnung in einer Kassette, wobei die Kassette einen Mittelteil (1) aufweist, an welchem ein Kranz von Zungen (3, 3'), die federnd in die zentrale Öffnung des wenigstens einen Datenträgers (2) eingreifen, befestigt ist,
**dadurch gekennzeichnet, dass**
wenigstens ein Verbindungselement (14,14') angeordnet ist, welches wenigstens zwei der Zungen (3,3') beweglich miteinander verbindet, wobei das Verbindungselement (14,14') bei der Herstellung der Befestigungsvorrichtung in einer ersten Position (14) gefertigt wird, und nach der Herstellung zur Erhöhung der Rückstellkraft der Zungen (3,3') gegen den Datenträger (2) in eine zweite Position (14') umgelegt ist.

2. Befestigungsvorrichtung nach Anspruch 1, **dadurch gekennzeichnet, dass** er darauf ausgelegt ist, dass der Datenträger (2) bei in der zweiten Position befindlichen Verbindungselement (14') eingelegt und wieder entnommen werden kann.

3. Befestigungsvorrichtung nach einem der vorhergehenden Ansprüche, **dadurch gekennzeichnet, dass** gegenüberliegende Zungen (3,3') über das wenigstens eine Verbindungselement (14,14') miteinander verbunden sind.

4. Befestigungsvorrichtung nach einem der vorhergehenden Ansprüche, **dadurch gekennzeichnet, dass** die Zungen (3,3') jeweils einen durch die zentrale Öffnung des wenigstens einen Datenträgers (2) führenden axialen Arm (5) aufweisen, und dass das wenigstens eine Verbindungselement (14,14') im wesentlichen an den der Entnahmerichtung des Datenträgers (2) zugewandten Enden dieser axialen Arme (5), bevorzugt mittelbar über an den der Entnahmerichtung des Datenträgers (2) zugewandten Enden dieser axialen Arme (5) angeordneten nach innen gerichteten radialen Armen (3), in die Zungen (3,3') verbindender Weise angeformt ist.

5. Befestigungsvorrichtung nach Anspruch 4, **dadurch gekennzeichnet, dass** in der ersten Position (14) das Verbindungselement wenigstens teilweise über die der Entnahmerichtung des Datenträgers (2) zugewandten Enden dieser axialen Arme (5) respektive der radialen Arme (13) hinausragt, und über ein Hineindrücken in Einlegerichtung des Datenträgers (2) in die zweite Position (14') umgelegt, vorzugsweise eingeschnappt wird, wobei weiterhin bevorzugt das Verbindungselement (14') in seiner zweiten Position im wesentlichen nicht mehr über die der Entnahmerichtung des Datenträgers (2) zugewandten Enden dieser axialen Arme (5) respektive der radialen Arme (13) hinausragt.

6. Befestigungsvorrichtung nach einem der Ansprüche 4 oder 5, **dadurch gekennzeichnet, dass** das Verbindungselement (14,14') insbesondere elastisch ausgebildete Stege (15) aufweist, welche an deren einem Ende mit den axialen (5) respektive radialen (13) Armen der Zungen (3,3') verbunden sind, und dass das Verbindungselement (14,14') weiterhin einen im wesentlichen auf der Symmetrieachse der Befestigungsvorrichtung angeordneten Knopf (16) aufweist, an welchem die Stege (15) mit deren anderem Ende verbunden sind.

7. Befestigungsvorrichtung nach einem der vorhergehenden Ansprüche, **dadurch gekennzeichnet, dass** die Zungen (3,3') und das wenigstens eine Verbindungselement (14,14') einstückig ausgebildet sind.

8. Befestigungsvorrichtung nach einem der vorhergehenden Ansprüche, **dadurch gekennzeichnet, dass** sie aus einem polymeren Werkstoff mit einem Elastizitätsmodul E im Bereich von 1300 bis 3200 MPa, insbesondere bevorzugt von weniger als 2000 MPa aufweist, wobei als Material dafür bevorzugt Thermoplaste insbesondere in Einkomponenten-Bauweise oder Zweikomponenten-Bauweise in Frage kommen.

9. Befestigungsvorrichtung nach einem der vorhergehenden Ansprüche, **dadurch gekennzeichnet, dass** der Kranz 6 oder 8 oder 10 Zungen (3,3') aufweist, wobei gegebenenfalls alternierend Zungen (3) mit Nasen (6) zur Halterung des Datenträgers (2) und Zungen (3') ohne Nasen (6) angeordnet sind, und dass entweder alle Zungen (3,3') oder nur die Zungen (3) mit Nasen (6) über ein Verbindungselement (14,14') verbunden sind, wobei das Verbindungselement (14,14') insbesondere bevorzugt einen zentralen einheitlichen Bereich (16) aufweist, sowie von diesem zentralen, einheitlichen Bereich (16) abzweigende, den zentralen einheitlichen Bereich (16) mit den Zungen (3,3') wenigstens mittelbar verbindende, elastische Stege (15).

10. Befestigungsvorrichtung nach einem der vorhergehenden Ansprüche, **dadurch gekennzeichnet, dass** der Mittelteil (1) einen inneren, im wesentlichen kreisscheibenförmigen Bereich (10) aufweist, an dessen innerem Rand die Zungen (3,3') derart beabstandet befestigt sind, dass zwischen den Zungen Spalten (4) verbleiben, und dass insbesondere bevorzugt der innere Bereich (10) Mittel (11) aufweist, welche eine erhöhte federnde Beweglichkeit des Kranzes von Zungen (3,3') relativ zur Kassette erlauben, wobei die Mittel (11) insbesondere bevorzugt in Form einer, bevorzugt umlaufenden, Verjüngung (11), und/oder in Form einer, bevorzugt umlaufenden, gewellten Ausgestaltung, und/oder in Form von Löchern im inneren Bereich (10) ausgebildet sind.

11. Befestigungsvorrichtung nach einem der vorhergehenden Ansprüche, **dadurch gekennzeichnet, dass** es sich beim kreisförmigen Datenträger (2) um eine CD oder eine DVD handelt.

12. Befestigungsvorrichtung nach einem der vorhergehenden Ansprüche, **dadurch gekennzeichnet, dass** die Zungen (3,3') zur Aufnahme von zwei übereinander liegenden Datenträgern (2) ausgebildet sind, wobei insbesondere bevorzugt alternierend nur an jeder zweiten Zunge eine Nase (6) zur axialen Halterung des Datenträgers (2) vorgesehen ist, und an den anderen Zungen eine Distanzhalterrippe zur kontrollierten Beabstandung der Datenträger (2) angeordnet ist.

13. Befestigungsvorrichtung nach einem der vorhergehenden Ansprüche, **dadurch gekennzeichnet, dass** das wenigstens eine Verbindungselement Stege (15) in Form von flexiblen, planen Lamellen mit einer Breite im Bereich von 0.8 bis 3 mm, bevorzugt im Bereich von 1 bis 2 mm und einer Dicke von 0.1 bis 0.4 mm, bevorzugt mit einer Dicke von 0.2 bis 0.3 mm aufweist.

14. Verfahren zur Herstellung einer Befestigungsvorrichtung nach einem der vorhergehenden Ansprüche, **dadurch gekennzeichnet, dass** in einem ersten Herstellungsschritt in einem Urform-Prozess das Verbindungselement (14,14') in einer ersten Position (14) gefertigt wird, und anschliessend spätestens nach der ersten Einlage des Datenträgers (2) zur Erhöhung der Rückstellkraft der Zungen (3,3') gegen den Datenträger (2) das Verbindungselement (14,14') in eine zweite Position (14') umgelegt wird.
